# EUROPÄISCHE PATENTSCHRIFT

(11) **EP 2 291 437 B1**
(45) Veröffentlichungstag und Bekanntmachung des Hinweises auf die Patenterteilung: **14.08.2019**
(21) Anmeldenummer: 09768862.6
(22) Anmeldetag: 06.03.2009
(51) Int. Cl.: C08J 5/00, C09J 7/00

(54) **BEFESTIGUNGSMITTEL UND VERFAHREN ZUR FIXIERUNG EINES GEGENSTANDS AUF EINER UNTERLAGE**
FASTENING COMPOSITION AND PROCESS FOR FIXING AN ARTICLE TO A SUBSTRATE
AGENT DE FIXATION ET PROCÉDÉ DE FIXATION D'UN OBJET SUR UN SUPPORT

(30) Priorität: 27.06.2008 CH 991082008
(43) Veröffentlichungstag der Anmeldung: 09.03.2011
(73) Patentinhaber: Aufrecht GmbH, 71563 Affalterbach (DE)
(72) Erfinder: RONNER, Christian, CH-8750 Glarus (CH)
(74) Vertreter: Ruckh, Rainer Gerhard
(86) Internationale Anmeldenummer: PCT/EP2009/001623
(87) Internationale Veröffentlichungsnummer: WO 2009/156013

(56) Entgegenhaltungen:
- EP-A1- 0 366 026
- WO-A1-00/37533
- WO-A2-2005/080462
- DE-A1-102007 011 511
- US-A- 3 034 944
- US-A- 6 025 445
- US-B1- 6 306 242
- US-B1- 6 506 279
- DATABASE WPI Week 198916 Thomson Scientific, London, GB; AN 1989-119544 XP002535598 -& JP 01 066279 A (OYO KOGYO CO) 13. März 1989 (1989-03-13)
- DATABASE WPI Week 200625 Thomson Scientific, London, GB; AN 2006-234560 XP002535599 -& JP 2006 070181 A (NOAC CORP KK) 16. März 2006 (2006-03-16)
- "Silicones", 15 April 2003 (2003-04-15), ENCYCLOPEDIA OF POLYMER SCIENCE AND TECHNOLOGY, WILEY, US, PAGE(S) 765 - 841, XP007918236, * page 783 *
- DATABASE WPI Week 200545 Thomson Scientific, London, GB; AN 2005-438355 -& JP 2005 146126 A (HORI GLASS CO LTD) 9 June 2005 (2005-06-09)
- Anonymous: "RÖMPP - Klebstoffe - Georg Thieme Verlag KG", , 1 September 2012 (2012-09-01), XP055226493, Retrieved from the Internet: URL:https://roempp.thieme.de/roempp4.0/do/ data/RD-11-01204 [retrieved on 2015-11-06]
- DATABASE WPI Week 199530 Thomson Scientific, London, GB; AN 1995-228890 -& JP H07 138536 A (SUMITOMO BAKELITE CO LTD) 30 May 1995 (1995-05-30)
- Bernd R. Burchardt ET AL: "Elastic Bonding and Sealing in Industry" In: "Adhesives and sealants : general knowledge, application techniques, new curing techniques", 1 January 2006 (2006-01-01), Elsevier, Amsterdam, NL [u.a.], XP055449186, ISBN: 978-0-08-044708-7 vol. 2, pages 355-xlii, DOI: 10.1016/S1874-5695(06)80017-5, * pages 410-417 *
- Powers: "Advanced MS Polymer Technology", , 10 July 2005 (2005-07-10), XP055449349, Retrieved from the Internet: URL:http://www.powers.com/pdfs/catalogs/49 105_powerstick_hi.pdf [retrieved on 2018-02-08]
- BY S SUGIYAMA ED - ANDREAS T WOLF: "Chapter 12 Evaluation of silicone sealants exposed to natural and accelerated weathering", DURABILITY OF BUILDING SEALANTS - EDITED BY ANDREAS T. WOLF, ROUTLEDGE, GB, PAGE(S) 190 - 200 , 1 March 2004 (2004-03-01), XP009508766, ISBN: 978-1-135-80445-9 Retrieved from the Internet: URL:https://ebookcentral.proquest.com/lib/ epo-ebooks/reader.action?docID=183073&ppg= 205

## Beschreibung

Die Erfindung betrifft ein Befestigungsmittel und ein Verfahren zur Fixierung eines Gegenstands auf einer Unterlage.

Ein spezifischer Anwendungsbereich des in Rede stehenden Verfahrens beziehungsweise des in Rede stehenden Befestigungsmittels ist die Fixierung von Gegenständen an Wänden von Gebäuden und dergleichen. Insbesondere im Sanitär- und Küchenbereich sind die Wände mit Wandverkleidungen bestehend aus Kacheln, Fliesen, Stein- oder Marmorplatten versehen. Generell bezieht sich das Verfahren auf unterschiedlichste Anwendungsgebiete wie den Flugzeugbau, Schiffsbau und Stahlbau.

Um an derartigen Wänden Ausstattungsartikel wie Möbel, Leuchten, sanitäre Einrichtungsgegenstände wie Handtuchhalter oder dergleichen zu befestigen, können insbesondere in bekannter Weise Befestigungsmittel in Form von Schrauben eingesetzt werden. Hierzu müssen jedoch zuerst Bohrungen in die Wände eingearbeitet werden, wobei in die Bohrungen Dübel eingeführt werden. Um eine Beschädigung der hochwertigen Wandverkleidungen wie Kacheln und dergleichen zu vermeiden, werden derartige Bohrungen üblicherweise in die Fugen zwischen den Kacheln eingearbeitet, was den Anbringungsort der Befestigungsmittel in unerwünschter Weise einschränkt. Ein weiterer Nachteil besteht darin, dass für den Fall, dass der Anbringungsort eines Ausstattungsartikels nach einiger Zeit wieder geändert werden soll, am alten Anbringungsort die Bohrungen sichtbar freiliegen, was den optischen Gesamteindruck der Wand auch dann noch erheblich beeinträchtigt, wenn die Bohrungen nachträglich mit einer Füllmasse wieder gefüllt werden.

Um derartige Nachteile zu vermeiden, ist versucht worden, Befestigungsmittel in Form von Schrauben durch Klebemittel zu ersetzen.

Im einfachsten Fall können hierzu Klebestreifen eingesetzt werden, im einfachsten Fall doppelseitiges Klebeband. Nachteilig hierbei ist einerseits, dass sich derartige Befestigungsmittel im Lauf der Zeit wieder lösen. Ein weiterer Nachteil besteht darin, dass mit diesen keine schwereren Ausstattungsartikel an Wänden befestigt werden können.

Prinzipiell ist auch der Einsatz von aerobem Klebstoff als Befestigungsmittel zur Fixierung von Gegenständen an Unterlagen wie Wänden eines Raumes eines Gebäudes denkbar. Ein Problem hierbei besteht jedoch darin, dass derartige aerobe Klebstoffe mehrere Stunden aushärten müssen, wobei hierzu eine Feuchtigkeitszufuhr zum aeroben Klebstoff notwendig ist. Wird jedoch eine Schicht von aerobem Klebstoff auf den Gegenstand aufgetragen und dann der Gegenstand mit der Schicht des aeroben Klebstoffs gegen die Unterlage gedrückt, ist die zwischen der Unterlage und dem Gegenstand liegende Schicht von der Umgebungsluft abgeschottet, so dass ein Aushärten des aeroben Klebstoffs nicht mehr möglich ist.

Ein Montagesystem, das den Einsatz derartiger aeroben Klebstoffe ermöglicht, ist aus der WO 03/036106 bekannt.

Dieses Montagesystem dient zur ortsfesten Anbringung von Gegenständen, wie Handtuchhaltern, Regalen, Leuchten oder dergleichen Ausstattungsartikel an einer Wand, Decke oder dergleichen Fläche, insbesondere in mit Kacheln, Marmorplatten oder mit dergleichen Wandverkleidungen ausgestatteten Räumen. Das Montagesystem besteht aus verschiedenartigen Befestigungselementen und einem Haft- und Verbindungsmittel, welches von einem aeroben Klebstoff gebildet sein kann. Die Befestigungselemente bestehen aus Sintermetallen, die je nach Einsatzzweck in ihrer Form anzupassen sind. Nachteilig bei derartigen Systemen sind sehr lange Aushärtezeiten des Klebstoffs, die bis zu zwölf Stunden betragen können, wodurch die Montagefreundlichkeit der Systeme stark beeinträchtigt ist.

Das Befestigungselement dient zur Aufnahme eines Elements zur Halterung des Gegenstands und weist einen Grundkörper auf, der an seiner zur Wand zeigenden Rückseite eine Ausnehmung und eine in letztere einmündende Einfüllöffnung besitzt, über welche das Haft- beziehungsweise Verbindungsmittel zwischen das Befestigungselement und der Wand eingebracht wird.

Das Befestigungselement weist für das Entweichen der von dem in die Ausnehmung eingebrachten Haft- beziehungsweise Verbindungsmittel verdrängten Luft wenigstens eine flüssigkeits- und gasdurchlässige Öffnung auf, die von der Ausnehmung bis in eine weitere Oberfläche des Befestigungselements reicht und die überschüssiges Haft- beziehungsweise Verbindungsmittel aufnimmt.

Die der Wand zugewandte Rückseite des Grundkörpers ist wenigstens in Teilbereichen derart flüssigkeits- und gasdurchlässig, so dass das beim Aushärten des in der Ausnehmung befindlichen Haft- und Verbindungsmittels entstehende Gas entweichen beziehungsweise flüchtende Bindemittel ausdunsten kann und zugleich Umgebungsluft an dieses Haft- und Verbindungsmittel gelangt, wodurch dieses aushärten kann und so für eine stabile und belastbare Fixierung des Befestigungsmittels an der Wand sorgt.

Nachteilig hierbei ist jedoch, dass die Ausbildung des Grundkörpers einen nicht unerheblichen konstruktiven Zusatzaufwand mit sich bringt und insbesondere auch die freie Gestaltung des Befestigungsmittels beeinträchtigt.

In Database WPI Week 198916 Thomson Scientific, London, GB; AN 1989-119544 XP002535598 -& JP 01 066279 A (TOYO KOGYO CO) 13. März 1989 (1989-03-13) wird ein Befestigungsmittel zur Fixierung von Gegenständen auf einer Unterlage beschrieben, welches aus seiner Mischung aus einem aeroben Klebstoff, der aus Polyurethan besteht, und einem hydrophilen Stoff in Form eines Salzes gebildet ist.

In Database WPI Week 200625 Thomson Scientific, London, GB; AN 2006-234560 XP002535599 -& JP 2006 070181 A (INOAC CORP KK) 16. März 2006 (2006-03-16) ist ein Befestigungsmittel mit einem Klebstoff und einem wasserabsorbierenden Stoff beschrieben.

In US 3,034,944 A ist ein Befestigungsmittel mit einer Klebstoffschicht beschrieben, welche wasseraktivierbare Partikel aufweist. Zudem ist ein faseriges Füllmaterial vorgesehen, welches Wasser absorbiert.

Die WO 00/37533 A1 betrifft ein Befestigungsmittel bestehend aus einer Klebstoff-Komponente in Form eines feuchtigkeitshärtenden silylierten Polymer und einem alkoholfreien hydrophilen Lösungsmittel.

In der US 6,306,242 B1 ist ein Verfahren zur Fixierung eines Polymer-Labels auf einer festen Unterlage aus Glas, Kunststoff oder dergleichen beschrieben. Zur Befestigung des Polymer-Labels wird eine hydrophile Festkörperschicht verwendet, auf welche Wasser aufgebracht wird.

Die EP 0 366 026 A1 betrifft ein Mörtelankersystem zum Befestigen von Bauteilen in Lochziegeln, Hohlkammersteinen oder anderem leichtem Mauerwerk, bei dem eine mit einer Verankerungseinrichtung versehene Wandbohrung durch einen Deckelkörper hindurch mit flüssiger Mörtelmasse gefüllt und ein sich durch den Deckel erstreckender Schraubkörper mit der als den Schraubkörper umgebende gewundene Drahtfeder ausgeführte Verankerungseinrichtung verbunden wird.

In "Silicones", 15. April 2003 (2003-04-15), Encyclopedia of Polymer Science and Technology, Wiley, US, Pages 765 - 841, XP007918236 sind allgemein die Eigenschaften von Silikonen und Silanen abgehandelt.

In Anonymous: "RÖMPP - Klebstoffe - Georg Thieme Verlag KG", 1. September 2012 (2012-09-01), XP055226493, sind aus Polymeren bestehende Klebstoffe beschrieben, welche als Ein- oder Mehrkomponenten-Klebstoffe ausgebildet sein können.

Die US 6 025 445 A betrifft eine härtbare Mischung bestehend aus einem gesättigten Kohlenwasserstoff-Polymer und einem Mittel zur Aushärtung mit einem Wasser enthaltenden Metallsalz.

In Database WPI Week 200545 Thomson Scientific, London, GB; AN 2005-438355 -& JP 2005 146126 A (HORI GLASS CO LTD) 9. Juni 2005 (2005-06-09) ist beschrieben, zwei Gegenstände durch einen Klebstoff zu verbinden, der in Kontakt mit einem feuchtigkeitsspendenden Material ist.

Die US 6,506,279 B1 betrifft ein Verfahren zur Herstellung von schnell härtenden Silikon-Massen umfassend Diorganopolysiloxane mit Acetoxysilanen, Reaktionsbeschleunigungen und Wasser.

In Database WPI Week 199530 Thomson Scientific, London, GB; AN 1995-228890 -& JP H07 138536 A (SUMITOMO BAKELITE CO LTD) 30. Mai 1995 (1995-05-30) ist ein Verfahren zum Verbinden zweier Gegenstände beschrieben. Bei diesem Verfahren wird eine Klebstoff-Komponente auf eine Oberfläche eines Gegenstands aufgetragen. Ein Träger aus Papier, einem Textil (insbesondere bestehend aus Baumwolle), wird mit einer zweiten Klebstoff-Komponente imprägniert. Die erste Klebstoff-Komponente kann ein unter Feuchtigkeit aushärtendes Polyurethan-Harz oder ein Silikon-Harz sein. Die zweite Klebstoff-Komponente enthält Flüssigkeit und einen Reaktions-Beschleuniger.

Die WO 2005/080462 A2 betrifft einen zweikomponentigen Klebstoff, welcher aus einem Siloxan und einer hydrophilen Komponente besteht.

In Bernd R. Burchardt ET AL: "Elastic Bonding and Sealing in Industry", in: "Adhesives and sealants : general knowledge, application techniques, new curing techniques", 1. Januar 2006 (2006-01-01), Elsevier, Amsterdam, NL [u.a.], XP055449186, ISBN: 978-0-08-044708-7 Bd. 2, Seiten 355-xlii, DOI: 10.1016/S1874-5695(06)80017-5 sind elastische Klebemittel beschrieben, die insbesondere im Baubereich eingesetzt werden.

In Powers: "Advanced MS Polymer Technology", 10. Juli 2005 (2005-07-10), XP055449349, gefunden im Internet: URL:http://www.powers.com/pdfs/catalogs/49105_powerstick_hi.pdf sind Klebstoffe auf Polymerbasis beschrieben.

Der Erfindung liegt die Aufgabe zugrunde, eine stabile, flexibel einsetzbare Befestigung für zwei Gegenstände bereitzustellen, ohne dass hierbei konstruktive Eingriffe in die Gegenstände selbst erforderlich sind.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Das erfindungsgemäße Befestigungsmittel besteht aus einer Mischung aus aerobem Klebstoff und einem hydrophilen Stoff.

Der Grundgedanke der Erfindung besteht darin, dass durch die Zugabe des hydrophilen Stoffes zum aeroben Klebstoff eine das Befestigungsmittel bildende Mischung entsteht, die nicht mehr in Oberflächenkontakt mit feuchter Umgebungsluft gebracht werden muss, um dann von dieser Oberfläche her auszuhärten. Vielmehr sorgt der in der Mischung vorhandene, den aeroben Klebstoff durchsetzende hydrophile Stoff dafür, dass der in der Mischung enthaltene aerobe Klebstoff von innen her auch dann aushärten kann, wenn kein äußerer Kontakt mehr zu der Feuchtigkeit enthaltenden Umgebungsluft mehr gegeben ist. Die zum Aushärten benötigte Feuchtigkeit beziehungsweise der benötigte Sauerstoff ist in dem hydrophilen Stoff selbst vorhanden, da dieser aufgrund seiner hydrophilen Eigenschaften genug Feuchtigkeit enthält, die für das Aushärten des aeroben Klebstoffs in der das Befestigungsmittel bildenden Mischung benötigt wird.

Da die hydrophilen Stoffe ihre Feuchtigkeit je nach Umgebungsbedingungen an die Umgebung abgeben oder auch Feuchtigkeit von der Umgebung aufnehmen, kann der Feuchtigkeitsgehalt der hydrophilen Stoffe je nach Anwendungsfall nicht groß genug sein um nach Mischung mit dem aeroben Klebstoff ein vollständiges Aushärten der Mischung zu gewährleisten.

Der Menge an Feuchtigkeit im hydrophilen Stoff beziehungsweise in der Mischung des hydrophilen Stoffs mit aerobem Klebstoff ist jedoch eine hohe Bedeutung zuzumessen. Zuviel Feuchtigkeit zerstört die Klebung, zu wenig Feuchtigkeit führt zu keiner Reaktion im aeroben Klebstoff, der insbesondere von Polymeren gebildet ist, so dass eine Aushärtung ausbleibt.

Um den geeigneten Feuchtigkeitsgehalt in dem erfindungsgemäßen Befestigungsmittel zu erhalten, wird der Mischung aus aerobem Klebstoff und hydrophilem Stoff dosiert Feuchtigkeit zugeführt. Besonders vorteilhaft erfolgt dabei eine dosierte Zugabe von Feuchtigkeit zum hydrophilen Stoff bevor dieser mit dem aeroben Klebstoff gemischt wird.

Besonders geeignet für eine dosierte Flüssigkeitszufuhr ist ein Spatel aus Holz, der zur Mischung der Komponenten verwendet wird und der zuvor in Wasser oder allgemein in eine Flüssigkeitsmenge getaucht wird. Die Wassermenge oder allgemein Flüssigkeitsmenge, die der Spatel aufnehmen kann, bildet eine dosierte Feuchtigkeitsmenge, die der Mischung von aerobem Klebstoff und hydrophilem Stoff zugeführt wird. Generell wirkt der hydrophile Stoff als Feuchtigkeitspuffer, der überschüssige Feuchtigkeit aufnehmen und bei Bedarf wieder abgeben kann. Durch den Mischvorgang gelangt die Feuchtigkeit in das gesamte Volumen der Mischung, wodurch diese vollständig aushärten kann. Alternativ zu einem Spatel können auch andere Dosierer für die Flüssigkeitszufuhr verwendet werden. Prinzipiell ist auch die Verwendung von gekapselten Elementen, die Flüssigkeit enthalten, möglich. Diese bersten beim Mischungsvorgang und geben dann die Flüssigkeit in die Mischung ab. Durch die Zugabe der Kapselungen ebenso wie durch die Zugabe des hydrophilen Stoffes können die Zug- und Scherfestigkeiten des erfindungsgemäßen Befestigungsmittels verbessert werden. Prinzipiell kann dem hydrophilen Stoff auch Speichergranulat als Feuchtigkeitsspeicher zugegeben werden.

Die Aushärtung erfolgt wegen der Vermischung mit hydrophilen Stoffen wesentlich schneller als bei allen anderen Verfahren.

Damit können mit dem erfindungsgemäßen Befestigungsmittel Gegenstände einfach dadurch fixiert werden, dass eine Schicht des Befestigungsmittels zwischen die beiden Gegenstände eingebracht wird.

Dabei kann die Schicht des Befestigungsmittels in beliebige Aussparungen oder Ausnehmungen der Gegenstände eingebracht werden und bei Zusammenführen der Gegenstände vollständig in einem geschlossenen, das heißt von diffusionsdichten Flächen begrenzten und von der Umgebungsluft isolierten Innenraum liegen, wobei dennoch ein sicheres Aushärten des aeroben Klebstoffs und damit eine auch mit hohen Kräften belastbare Verbindung der Gegenstände geschaffen wird. Weiterhin kann das Befestigungsmittel auch auf ebene Flächen aufgebracht werden. Auch hier kann das erfindungsgemäße Befestigungsmittel zwischen zwei diffusionsdichten Flächen eingesetzt werden, um diese zu verbinden. Erfindungsgemäß ist der aerobe Klebstoff von silanen MS-Polymeren gebildet.

Die hydrophilen Stoffe sind von hydrophilen Trägerfasern gebildet, die von Naturfasern oder Chemiefasern gebildet sein können und welche bevorzugt aus Baumwolle bestehen. Prinzipiell eignen sich als hydrophile Stoffe Kreide, Mehl, Blähton, Galaktose, Watte, Flachs, Hanf, Viskose, Zellulose, Seegras, Filz oder auch Holzfasern, Luftporenfilter oder allgemein atmungsaktive Stoffe.

Ein wesentlicher Vorteil des erfindungsgemäßen Befestigungsmittels besteht darin, dass ein genaues Mischungsverhältnis von aerobem Klebstoff und hydrophilem Stoff nicht eingehalten werden muss, um die erfindungsgemäße Funktion des Befestigungsmittels zu gewährleisten. Um ein möglichst gutes Aushärten des aeroben Klebstoffs zu gewährleisten ist es lediglich vorteilhaft, wenn der hydrophile Stoff möglichst homogen mit dem aeroben Klebstoff vermengt wird.

Weiterhin ist für die Anwendung des Befestigungsmittels wesentlich, dass die Komponenten des Befestigungsmittels erst kurz vor Gebrauch des Befestigungsmittels zusammengemischt werden.

Zweckmäßigerweise wird hierzu ein Montageset, bereitgestellt, welches zwei Aufnahmen zur getrennten Lagerung des aeroben Klebstoffs und des hydrophilen Stoffs, insbesondere der hydrophilen Trägerfaser aufweist. Aus diesen Aufnahmen können dann die Komponenten in gewünschter Menge zur Anmischung des Befestigungsmittels entnommen werden.

Da keine genauen Mischungsverhältnisse von aerobem Klebstoff und hydrophilem Stoff eingehalten werden müssen, lässt sich das Befestigungsmittel aus den Komponenten auch von ungeübten Personen schnell und einfach anmischen.

Ein weiterer Vorteil des erfindungsgemäßen Befestigungsmittels besteht darin, dass mit diesem eine reversible Verbindung zweier Gegenstände hergestellt wird. Dies beruht darauf, dass die durch das Befestigungsmittel hergestellte Verbindung der Gegenstände äußerst stabil gegen wirkende Zugkräfte, jedoch weniger stabil gegen wirkende Scherkräfte ist. Damit kann durch Abdrehen eines Gegenstands die durch das Befestigungsmittel hergestellte Verbindung gelöst werden. Dann können die Verbindungsstellen durch einen Spatel oder dergleichen von den Resten des Befestigungsmittels gesäubert werden.

Das erfindungsgemäße Verfahren umfasst zur Fixierung eines Gegenstands auf einer Unterlage mittels eines als Montagesets ausgebildeten Befestigungsmittels folgende Verfahrensschritte:
Dosiertes Zuführen von Feuchtigkeit zu dem hydrophilen Stoff. Darauf folgend die Anmischung des Befestigungsmittels durch Vermengen eines von einer hydrophilen Trägerfaser gebildeten hydrophilen Stoffs mit aerobem Klebstoff und darauf folgendes Aufbringen einer Schicht des Befestigungsmittels auf den Gegenstand. Anschließendes Fixieren des Gegenstands auf der Unterlage durch Andrücken der Schicht des Befestigungsmittels an der Unterlage, wobei in dieser Schicht der aerobe Klebstoff durch in dem hydrophilen Stoff enthaltenen Feuchtigkeit aushärtet.

Besonders vorteilhaft erfolgt vor Vermengen des aeroben Klebstoffs mit dem hydrophilen Stoff eine dosierte Flüssigkeitszufuhr zum hydrophilen Stoff.

Besonders vorteilhaft kann die Unterlage von einer Wand und der Gegenstand von einem Befestigungselement gebildet sein, an welchem ein Ausstattungsartikel angebracht werden kann.

Dabei wird der Ausstattungsartikel an dem Befestigungselement angebracht, nachdem die Schicht des Befestigungsmittels zwischen der Wand und dem Befestigungsmittel ausgehärtet ist. Generell können Ausstattungsgegenstände auch direkt mit dem Befestigungsmittel an der Wand angebracht werden.

Die Befestigung des Befestigungsmittels an der Wand erfolgt erfindungsgemäß ohne Verwendung von Schrauben und dergleichen, so dass in die Wand keinerlei Bohrungen eingearbeitet werden.

Damit kann die Befestigung ohne Beschädigungen oder Beeinträchtigungen der Wand erfolgen.

Dies ist besonders vorteilhaft wenn die Wand eine Wandverkleidung aus Kacheln, Fliesen oder Stein- oder Marmorplatten aufweist, auf welcher das Befestigungselement fixiert wird.

Für die empfindliche und typischerweise hochwertige Wandverkleidung besteht beim Befestigungsprozess keinerlei Gefahr einer Beschädigung oder Beeinträchtigung.

Die Erfindung wird im Folgenden anhand der Zeichnungen erläutert. Es zeigen:
- Figur 1:: Schematische Darstellung eines Montagesets mit den Komponenten des erfindungsgemäßen Befestigungsmittels.
- Figur 2:: In einem Gefäß angemischtes Befestigungsmittel.
- Figur 3:: Fixierung eines Gegenstands an einer Wand mittels des Befestigungsmittels gemäß Figur 1.

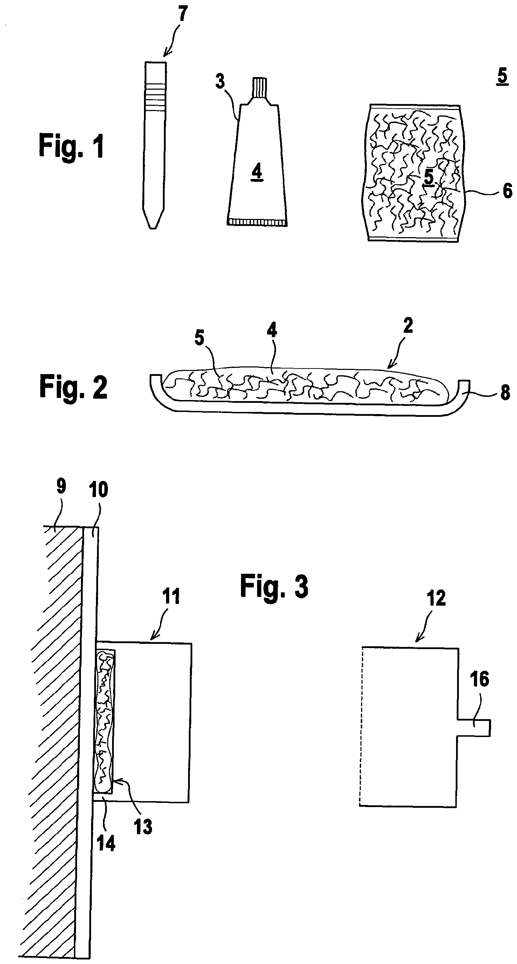

Figur 1 zeigt schematisch ein Montageset 1 mit den einzelnen Komponenten zur Herstellung eines Befestigungsmittels 2, welches in Figur 2 in angemischtem Zustand gezeigt ist.

Das Montageset 1 umfasst eine Tube 3, in welcher ein aerober Klebstoff 4 gelagert ist. Der aerobe Klebstoff 4 ist im vorliegenden Fall von silanen MS-Polymeren gebildet. Weiterhin umfasst das Montageset 1 eine Menge von hydrophilen Stoffen, die im vorliegenden Fall von hydrophilen Trägerfasern 5 gebildet sind, welche in einem Beutel 6 oder dergleichen gelagert sind. Im vorliegenden Fall wird als hydrophile Trägerfaser 5 ungetrocknete Baumwolle verwendet. Das Montageset 1 wird komplettiert durch einen Spatel 7 sowie gegebenenfalls durch eine nicht dargestellte Bedienungsanleitung.

Zur Herstellung des Befestigungsmittels 2 wird dieses unmittelbar vor Gebrauch zur Fixierung von Gegenständen aus den Komponenten, nämlich dem aeroben Klebstoff 4 und der hydrophilen Trägerfaser 5, angemischt. Hierzu werden aerober Klebstoff 4 und hydrophile Trägerfasern 5 wie in Figur 2 dargestellt in ein Gefäß 8 oder dergleichen gegeben und dann mit dem Spatel 7 homogen vermischt.

Der Spatel 7 besteht bevorzugt aus Holz. Um in der Mischung einen für eine komplette Aushärtung geeigneten Feuchtigkeitsgehalt zu erhalten, wird der Spatel 7 zunächst in Wasser getaucht. Die somit enthaltene Feuchtigkeit im Spatel 7 wird dann auf den hydrophilen Stoff übertragen, wonach dieser unter Verwendung des Spatels 7 mit dem aeroben Klebstoff 4 gemischt wird.

Vorzugsweise beträgt der Volumenanteil an hydrophilen Trägerfasern 5 in der Mischung etwa 30 bis 40 % wobei der Gewichtsanteil der hydrophilen Trägerfaser 5 in der Mischung in der Größenordnung von 10 % liegt.

Unmittelbar nach Anmischen des Befestigungsmittels 2 wird dieses zur Fixierung zweier Gegenstände verwendet.

Ein Beispiel hierfür zeigt Figur 3. In Figur 3 ist der Ausschnitt einer Wand 9 eines Gebäudes, insbesondere eines Zimmers eines Wohnhauses dargestellt, auf welcher eine Wandverkleidung 10 in Form von Kacheln aufgebracht ist.

Auf der Wandverkleidung 10 der Wand 9 *soll* ein Befestigungsmittel 2 befestigt werden, an welchem dann ein Ausstattungsartikel, insbesondere ein sanitärer Einrichtungsgegenstand wie ein Handtuchhalter, ein Regal, eine Duscharmatur oder dergleichen befestigt werden soll. Generell können mehrere derartiger Befestigungselemente 11 zur Fixierung eines Ausstattungsartikels vorgesehen sein.

In Figur 3 ist schematisch ein Verschlusselement 12 als Bestandteil des Ausstattungsartikels dargestellt, welches auf dem Befestigungselement 11 fixiert werden kann.

Das Befestigungselement 11 weist eine im wesentlichen kreisscheibenförmige Kontur auf. An der der Wand 9 zugewandten Unterseite befindet sich eine Ausnehmung 13, die von einem über den gesamten Umfang des Befestigungselements 11 umlaufenden Randsegment 14 begrenzt ist.

Das in Figur 2 dargestellte, frisch angemischte Befestigungsmittel 2 wird, beispielsweise mit dem Spatel 7 bei von der Wand 9 abgenommenem Befestigungselement 11 in die Ausnehmung 13 des Befestigungselements 11 eingefüllt, wodurch eine definierte, modellierbare Schicht des Befestigungselements 11 gebildet wird.

Dann wird das Befestigungsmittel 2 mit der Schicht des Befestigungselements 11 auf die Wandverkleidung 10 der Wand 9 aufgesetzt. Dadurch, dass der aerobe Klebstoff 4 im Befestigungsmittel 2 sofort eine gewisse Klebkraft aufweist, ist das Befestigungselement 11, das nur einen Durchmesser von wenigen Zentimetern und ein geringes Eigengewicht aufweist, sicher an der Wandverkleidung 10 gehalten.

Um ein seitliches Austreten des Befestigungsmittels 2 am Befestigungselement 11 bei Aufsetzen auf die Wandverkleidung 10 zu vermeiden, können im Befestigungselement 11 in axialer Richtung verlaufende, an der Ausnehmung 13 ausmündende Bohrungen vorgesehen sein, in welche überschüssiges Befestigungsmittel 2 bei Aufsetzen auf die Wandverkleidung 10 eindringen kann.

Obwohl nach Aufsetzen des Befestigungselements 11 auf die Wandverkleidung 10 das Befestigungsmittel 2 in einem völlig geschlossenen Raum liegt und keinen Kontakt zur Umgebungsluft hat, kann der aerobe Klebstoff 4 im Befestigungsmittel 2 durch die Zugabe der hydrophilen Trägerfaser 5 vollständig von innen heraus aushärten, da die hydrophile Trägerfaser 5 die hierzu erforderliche Feuchtigkeit beziehungsweise den hierzu erforderlichen Sauerstoff gespeichert hat.

Sobald das Befestigungsmittel 2 ausgehärtet ist, ist eine belastbare Befestigung des Befestigungselements 11 an der Wand 9 gegeben, so dass an diesem der Ausstattungsartikel angebracht werden kann. Hierzu wird im vorliegenden Fall das Verschlusselement 12 durch eine Schraub- oder Steckverbindung auf dem Befestigungselement 11 befestigt. Das Verschlusselement 12 weist ein Aufnahmeelement 16 auf, an welchem dann der Ausstattungsartikel wie zum Beispiel ein Handtuchhalter befestigt werden kann.

### Bezugszeichenliste

- (1): Montageset
- (2): Befestigungsmittel
- (3): Tube
- (4): aerober Klebstoff
- (5): hydrophile Trägerfaser
- (6): Beutel
- (7): Spatel
- (8): Gefäß
- (9): Wand
- (10): Wandverkleidung
- (11): Befestigungselement
- (12): Verschlusselement
- (13): Ausnehmung
- (14): Randsegment

## Patentansprüche

1. Befestigungsmittel (2) zur Fixierung zweier Gegenstände, bestehend aus einer Mischung aus einem aeroben Klebstoff (4) und einem einen Feuchtigkeitspuffer bildenden hydrophilen Stoff, **dadurch gekennzeichnet, dass** der aerobe Klebstoff (4) von silanen MS-Polymeren gebildet ist, und dass der hydrophile Stoff von einer hydrophilen Trägerfaser (5) gebildet ist, und dass das Befestigungsmittel als Montageset (1) ausgebildet ist, welches zwei Aufnahmen zur getrennten Lagerung des aeroben Klebstoffs (4) und des hydrophilen Stoffs aufweist, wobei aus den Aufnahmen der aerobe Klebstoff (4) und der hydrophile Stoff zur Anmischung des Befestigungsmittels (2) entnehmbar sind, wobei dem hydrophilen Stoff dosiert Feuchtigkeit zugegeben ist, so dass das Befestigungsmittel in einem von diffusionsdichten Flächen begrenzten und von der Umgebungswelt isolierten Innenraum liegend aushärten kann.

2. Befestigungsmittel nach Anspruch 1, **dadurch gekennzeichnet, dass** dessen Eigenschaften durch Vorgabe des Mischungsverhältnisses von aerobem Klebstoff (4) und hydrophilem Stoff vorgebbar sind.

3. Befestigungsmittel nach Anspruch 2, **dadurch gekennzeichnet, dass** dessen Sollbruchstelle durch das Mischungsverhältnis von aerobem Klebstoff (4) und hydrophilem Stoff vorgebbar ist.

4. Befestigungsmittel nach Anspruch 3, **dadurch gekennzeichnet, dass** dessen Grundklebkraft und/oder Aushärtungsgeschwindigkeit durch das Mischungsverhältnis von aerobem Klebstoff (4) und hydrophilem Stoff vorgebbar ist.

5. Verfahren zur Fixierung eines Gegenstands auf einer Unterlage mittels eines als Montagesets (1) ausgebildeten Befestigungsmittels gemäß einem der Ansprüche 1 bis 4 umfassend folgende Verfahrensschritte:
Dosiertes Zuführen von Feuchtigkeit zu dem hydrophilen Stoff und darauf folgend
Anmischung des Befestigungsmittels (2) durch Vermengen eines von einer hydrophilen Trägerfaser gebildeten hydrophilen Stoffs mit aerobem Klebstoff (4), darauf folgendes Aufbringen einer Schicht des Befestigungsmittels (2) auf den Gegenstand,
und anschließendes Fixieren des Gegenstands auf der Unterlage durch Andrücken der Schicht des Befestigungsmittels (2) an der Unterlage, wobei in dieser Schicht der aerobe Klebstoff (4) durch in dem hydrophilen Stoff enthaltenen Feuchtigkeit aushärtet.

6. Verfahren nach Anspruch 5, **dadurch gekennzeichnet, dass** vor dem Vermengen mit dem aeroben Klebstoff (4) dem hydrophilen Stoff dosiert Feuchtigkeit zugeführt wird.

7. Verfahren nach einem der Ansprüche 5 oder 6, **dadurch gekennzeichnet, dass** der Gegenstand eine mechanische Befestigung, insbesondere eine Rohrschelle oder ein Adaptionsteil ist.

8. Verfahren nach einem der Ansprüche 5 bis 7, **dadurch gekennzeichnet, dass** die Unterlage von einer Wand (9) gebildet ist, und dass der Gegenstand von einem Befestigungselement (11) gebildet ist, an welchem ein Ausstattungsartikel angebracht werden kann, wobei die Wand (9) eine Wandverkleidung (10) aus Kacheln, Fliesen oder Stein- oder Marmorplatten aufweist, auf welcher das Befestigungselement (11) fixiert wird.

9. Verfahren nach Anspruch 8, **dadurch gekennzeichnet, dass** der Ausstattungsartikel an dem Befestigungselement (11) angebracht wird, nachdem die Schicht des Befestigungsmittels (2) zwischen der Wand (9) und dem Befestigungsmittel (2) ausgehärtet ist.

10. Verfahren nach einem der Ansprüche 8 oder 9, **dadurch gekennzeichnet, dass** der Ausstattungsartikel von einer Leuchte, einem Möbel oder einem sanitären Einrichtungsgegenstand gebildet ist.

## Claims

1. Fastening means (2) for fixing two articles, consisting of a mixture of an aerobic adhesive (4) and a hydrophilic substance forming a moisture buffer, **characterised in that** the aerobic adhesive (4) is formed by silane MS polymers, that the hydrophilic substance is formed by a hydrophilic carrier fibre (5) and that the fastening means is constructed as a mounting set (1) comprising two receptacles for separate storage of the aerobic adhesive (4) and the hydrophilic substance, wherein the aerobic adhesive (4) and the hydrophilic substance are removable from the receptacles for mixing up of the fastening means (2) and wherein moisture is admetered to the hydrophilic substance so that that fastening means lying in an interior space bounded by diffusion-tight surfaces and isolated from the environment can harden.

2. Fastening means according to claim 1, **characterised in that** the characteristics thereof are predeterminable by predetermining the mixture ratio of aerobic adhesive (4) and hydrophilic substance.

3. Fastening means according to claim 2, **characterised in that** the intended breaking point thereof is predeterminable by the mixture ratio of aerobic adhesive (4) and hydrophilic substance.

4. Fastening means according to claim 3, **characterised in that** the basic adhesive force and/or rate of hardening is predeterminable by the mixture ratio of aerobic adhesive (4) and hydrophilic substance.

5. Method of fixing an article to a substrate by way of fastening means, which is constructed as a mounting set (1), according to any one of claims 1 to 4, comprising the following method steps:
metered feed of moisture to the hydrophilic substance and following thereon
mixing up the fastening means (2) by mixing a hydrophilic substance, which is formed by a hydrophilic carrier fibre, with aerobic adhesive (4),
subsequently thereto applying a layer of the fastening means (2) to the article and subsequent fixing of the article to the substrate by pressing the layer of the fastening means (2) against the substrate, wherein in this layer the aerobic adhesive (4) hardens by moisture contained in the hydrophilic substance.

6. Method according to claim 5, **characterised in that** moisture is admetered to the hydrophilic substance before the mixing with the aerobic adhesive (4).

7. Method according to one of claims 5 and 6, **characterised in that** the article is a mechanical fastener, particularly a pipe clamp or an adapter member.

8. Method according to any one of claims 5 to 7, **characterised in that** the substrate is formed by a wall (9) and the article is formed by a fastening element (11) on which a furnishing article can be mounted, wherein the wall (9) comprises a wall cladding (10) of tiles, flags or stone or marble slabs, on which the fastening element (11) is fixed.

9. Method according to claim 8, **characterised in that** the furnishing article is mounted on the fastening element (11) after the layer of the fastening means (2) between the wall (9) and the fastening means (2) has hardened.

10. Method according to any one of claims 8 and 9, **characterised in that** the furnishing article is formed by a light, an article of furniture or a sanitary fitting.

## Revendications

1. Agent de fixation (2) dévolu au blocage à demeure de deux objets, consistant en un mélange d'un adhésif aérobie (4) et d'une substance hydrophile formant un tampon d'humidité, **caractérisé par le fait que** l'adhésif aérobie (4) est constitué de polymères modifiés silane ; **par le fait que** la substance hydrophile est constituée d'une fibre hydrophile (5) formant substrat ; et **par le fait que** ledit agent de fixation est réalisé sous la forme d'un ensemble de montage (1) muni de deux réceptacles affectés au stockage séparé de l'adhésif aérobie (4) et de la substance hydrophile, ledit adhésif aérobie (4) et ladite substance hydrophile pouvant être extraits desdits réceptacles vue de l'amalgame dudit agent de fixation (2), sachant que de l'humidité est ajoutée à ladite substance hydrophile, de manière dosée, de telle sorte que ledit agent de fixation puisse durcir en étant logé dans un espace interne délimité par des surfaces étanches à la diffusion, et isolé du milieu environnant.

2. Agent de fixation selon la revendication 1, **caractérisé par le fait que** les propriétés dudit agent peuvent être préétablies par détermination préalable du rapport de mélange de l'adhésif aérobie (4) et de la substance hydrophile.

3. Agent de fixation selon la revendication 2, **caractérisé par le fait que** le point de rupture par destination dudit agent peut être préétabli sur la base du rapport de mélange de l'adhésif aérobie (4) et de la substance hydrophile.

4. Agent de fixation selon la revendication 3, **caractérisé par le fait que** la force d'adhérence fondamentale et/ou la vitesse de durcissement dudit agent peu(ven)t être préétablie(s) sur la base du rapport de mélange de l'adhésif aérobie (4) et de la substance hydrophile.

5. Procédé de blocage à demeure d'un objet sur une structure sous-jacente au moyen d'un agent de fixation conforme à l'une des revendications 1 à 4, réalisé sous la forme d'un ensemble de montage (1), incluant les étapes opératoires suivantes :
adjonction dosée d'humidité à la substance hydrophile, suivie d'un
amalgame de l'agent de fixation (2) par mélange, avec un adhésif aérobie (4), d'une substance hydrophile constituée d'une fibre hydrophile (5) formant substrat, suivi d'un dépôt d'une couche dudit agent de fixation (2) sur l'objet
et, au stade successif, blocage à demeure dudit objet sur la structure sous-jacente en pressant la couche dudit agent de fixation (2) sur ladite structure sous-jacente, sachant que ledit adhésif aérobie (4) durcit, dans cette couche, sous l'action d'une humidité renfermée par ladite substance hydrophile.

6. Procédé selon la revendication 5, **caractérisé par le fait que** de l'humidité est ajoutée à la substance hydrophile, de manière dosée, préalablement au mélange avec l'adhésif aérobie (4).

7. Procédé selon l'une des revendications 5 ou 6, **caractérisé par le fait que** l'objet est une fixation mécanique, en particulier un collier de serrage ou une pièce d'adaptation.

8. Procédé selon l'une des revendications 5 à 7, **caractérisé par le fait que** la structure sous-jacente est constituée d'une paroi (9) ; et **par le fait que** l'objet est constitué d'un élément de fixation (11) sur lequel un article d'équipement peut être installé, ladite paroi (9) comportant un revêtement mural (10) en des carreaux de céramique, en du carrelage, voire en des dalles de pierre ou de marbre, sur lequel ledit élément de fixation (11) est bloqué à demeure.

9. Procédé selon la revendication 8, **caractérisé par le fait que** l'article d'équipement est installé sur l'élément de fixation (11) après durcissement de la couche de l'agent de fixation (2), entre la paroi (9) et ledit agent de fixation (2).

10. Procédé selon l'une des revendications 8 ou 9, **caractérisé par le fait que** l'article d'équipement se présente comme une lampe, un meuble ou un objet d'appareillage sanitaire.
